(19)

Europäisches
Patentamt
European
Patent Office
Office européen
des brevets

(11) **EP 4 297 124 A1**

(12) **EUROPEAN PATENT APPLICATION**

(43) Date of publication:
**27.12.2023 Bulletin 2023/52**

(21) Application number: **23180548.2**

(22) Date of filing: **21.06.2023**

(51) International Patent Classification (IPC):
**H01M 4/131** (2010.01)       **H01M 4/133** (2010.01)
**H01M 4/1391** (2010.01)      **H01M 4/1393** (2010.01)
**H01M 4/36** (2006.01)         **H01M 4/485** (2010.01)
**H01M 4/583** (2010.01)       **H01M 10/0525** (2010.01)
**H01M 4/02** (2006.01)

(52) Cooperative Patent Classification (CPC):
**H01M 4/131; H01M 4/133; H01M 4/1391;**
**H01M 4/1393; H01M 4/364; H01M 4/366;**
**H01M 4/485; H01M 4/583; H01M 10/0525;**
H01M 2004/021; H01M 2004/027; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **24.06.2022   CN 202210723043**

(71) Applicant: **Ningde Amperex Technology Ltd.**
**Ningde City, Fujian 352100 (CN)**

(72) Inventors:
• ZHENG, Zigui
  **Ningde City, Fujian Province, People s Republic**
  **of**
  **China, 352100 (CN)**
• YI, Zheng
  **Ningde City, Fujian Province, People s Republic**
  **of**
  **China, 352100 (CN)**
• XIE, Yuansen
  **Ningde City, Fujian Province, People s Republic**
  **of**
  **China, 352100 (CN)**

(74) Representative: **Icosa**
  **83 avenue Denfert-Rochereau**
  **75014 Paris (FR)**

(54) **NEGATIVE ACTIVE MATERIAL, SECONDARY BATTERY, AND ELECTRONIC APPARATUS**

(57)    This application provides a negative active material, a secondary battery, and an electronic apparatus. The negative active material of this application includes composite particles. The composite particle includes a first region and a second region, where the first region includes a disordered carbon structure, and the second region includes an ordered carbon structure and/or a metal oxide structure. The negative active material of this application has a high gram capacity and active ion diffusion coefficient, so that a secondary battery containing such negative active material has a high energy density and excellent cycling performance, rate performance, and fast charging capacity.

EP 4 297 124 A1

**Description**

**TECHNICAL FIELD**

This application relates to the field of energy storage. Specifically, this application relates to a negative active material, a secondary battery, and an electronic apparatus.

**BACKGROUND**

With the advantages such as high working voltage, wide application temperature range, and low self-discharge rate, secondary batteries have been widely used in mobile electronic devices, household appliances, electric vehicles, and other fields. With continuous development of products using secondary batteries, higher requirements are also imposed on capacity, energy density, charge/discharge rate, and cycling stability of secondary batteries in various fields. At present, graphite materials are stilled used as a main commercialized negative electrode material of secondary batteries. Graphite negative electrodes have the advantages such as high conductivity and high stability but a low theoretical specific capacity. The existing graphite negative electrodes have a specific capacity close to its theoretical maximum value of 372 mAh/g, and have serious swelling under a fast charging system, resulting in decrease in service life and reliability of secondary batteries.

Compared with graphite materials, hard carbon materials have a higher reversible specific capacity, generally ranging from 500 mAh/g to 700 mAh/g and even up to 1000 mAh/g or higher, and therefore have excellent rate charge/discharge performance. However, with a too high electrode potential, hard carbon materials have shortcomings such as potential hysteresis (that is, a lithiation potential is less than a delithiation potential) and large irreversible capacity in the first cycle, affecting the commercialization process of application of hard carbon materials in negative electrodes. Therefore, it is necessary to further research hard carbon materials with excellent electrochemical performance and expand their application fields.

**SUMMARY**

In view of the foregoing problems in the prior art, this application provides a negative active material and a secondary battery including such negative active material so as to increase a gram capacity of the negative active material and a diffusion coefficient of active ions inside the negative active material, thereby increasing the energy density of the secondary battery and improving the cycling performance, rate performance, and fast charging capacity of the secondary battery.

A first aspect of this application provides a negative active material. The negative active material includes composite particles, where the composite particle includes a first region and a second region, the first region includes a disordered carbon structure, the second region includes an ordered carbon structure and/or a metal oxide structure, and a surface of the composite particle includes the first region. The inventors of this application have found through research that for the first region including the disordered carbon structure, for example, a hard carbon material region, as disordered amorphous graphite, the region has a disorderly-arranged internal structure and lots of pore structures, resulting in low true density and compacted density thereof. According to this application, the composite particle is provided with the first region including the disordered carbon structure and the second region including the ordered structure, not only maintaining the capacity level of the negative active material but also effectively increasing the compacted density of the negative active material, thereby increasing the energy density of the secondary battery. In addition, the second region including the ordered structure can further effectively reduce a free path for the active ions, improve internal diffusion kinetics of the negative active material, and reduce internal polarization of the negative active material, thereby improving the fast charging performance, rate performance, and cycling performance of the secondary battery.

According to some embodiment of this application, the first region includes a first active material, where the first active material includes hard carbon and/or soft carbon. Compared with soft carbon, hard carbon has a larger d002 interplanar spacing and more micropores after a thermal treatment at 1000°C or a higher temperature and thus can provide more active ion deintercalation sites.

According to some embodiment of this application, the second region includes a second active material, where the second active material includes at least one of graphite, graphene, carbon nanotubes, lithium oxide, or a transition metal oxide.

According to some embodiment of this application, an average particle size of the graphite is 10 nm to 1000 nm, an average flake size of the graphene is 10 nm to 2000 nm, an average diameter of the carbon nanotubes is 10 nm to 2000 nm, an average particle size of the lithium oxide is 10 nm to 1000 nm, and an average particle size of the transition metal oxide is 10 nm to 1000 nm; and preferably, the average particle size of the graphite is 20 nm to 300 nm, the average flake size of the graphene is 20 nm to 500 nm, the average diameter of the carbon nanotubes is 20 nm to 500 nm, the average particle size of the lithium oxide is 20 nm to 300 nm, and the average particle size of the transition metal oxide is 20 nm to 300 nm. Active ions diffuse more easily in the second active material. To improve the diffusion capability of active ions in a negative electrode, a larger contact area is required between the first region and the second region. When the average particle size, average flake size, or average diameter of the second active material is within this range, the first region and the second region can have a large contact area, improving the diffusion capability of the active ions, thereby further improving the rate performance, fast charging performance, and cycling performance of the secondary battery.

According to some embodiment of this application, the second region is in disordered distribution or layered distribution inside the composite particle. The second region being in disordered distribution or layered distribution inside the composite particle can effectively reduce the free path for the active ions and increase a solid-state diffusion rate of the active ions, thereby further improving the rate performance, fast charging performance, and cycling performance of the secondary battery.

According to some embodiment of this application, the composite particles are primary particles. In some embodiments, the particle size of the composite particle satisfies $3\ \mu m \le D_v 50 \le 12\ \mu m$. The particle size of the composite particle being within the foregoing range can further improve the kinetic performance of the secondary battery and improve the rate performance, fast charging performance, and cycling performance of the secondary battery.

According to some embodiment of this application, an X-ray photoelectron spectroscopy pattern of the negative active material shows a characteristic peak within a range of 283 eV to 288 eV, where the characteristic peak corresponds to the disordered carbon structure in the first region in the composite particle.

According to some embodiment of this application, the negative active material has an ID/IG of 0.6 to 1.3, where ID represents a peak intensity within a wavenumber of 1300 cm$^{-1}$ to 1400 cm$^{-1}$ during a Raman spectrum test, and IG represents a peak intensity within a wavenumber of 1550 cm$^{-1}$ to 1650 cm$^{-1}$ during a Raman spectrum test.

According to some embodiment of this application, an X-ray diffraction pattern of the negative active material shows a characteristic peak when $2\theta$ is within a range of 18° to 30°, where the characteristic peak corresponds to the disordered carbon structure in the first region in the composite particle. In some embodiments, a full width at half maximum of the characteristic peak is 4° to 12°.

According to some embodiment of this application, an X-ray diffraction pattern of the negative active material shows a characteristic peak when $2\theta$ is within a range of 26° to 27°, where the characteristic peak corresponds to the graphite or carbon nanotubes (CNT) in the second region.

According to some embodiment of this application, an X-ray diffraction pattern of the negative active material shows a characteristic peak when $2\theta$ is within at least one of the following ranges: 18° to 19°, 35° to 36°, or 43° to 44°, where the characteristic peak corresponds to lithium titanate in the second region.

According to some embodiment of this application, an X-ray diffraction pattern of the negative active material shows a characteristic peak when $2\theta$ is within at least one of the following ranges: 30° to 31°, 35° to 36°, 42.5° to 43.5°, 56.5° to 57.5°, or 62° to 63°, where the characteristic peak corresponds to ferroferric oxide in the second region.

According to some embodiment of this application, a specific surface area of the negative active material is 1 m$^2$/g to 50 m$^2$/g. The specific surface area of the negative active material being within the foregoing range can further improve the rate performance, fast charging performance, and cycling performance of the secondary battery.

A second aspect of this application provides a secondary battery. The secondary battery includes a negative electrode, where the negative electrode includes a negative active material layer and a current collector, and the negative active material layer includes the negative active material according to the first aspect.

According to some embodiments of this application, a porosity of the negative active material layer is 10% to 50%. The porosity of the negative active material layer being within this range can further improve the rate performance, fast charging performance, and cycling performance of the secondary battery. If the porosity is excessively large, particles of the negative active material have less contact points, resulting in an increase in internal resistance of the secondary battery. However, an excessively small porosity may cause poor infiltration of an electrolyte and a longer transmission path for the active ions, hindering migration of the active ions between a positive electrode and a negative electrode, and thus a negative electrode plate in no contact with the electrolyte cannot participate in an electrochemical reaction inside the secondary battery. In addition, interface resistance of the secondary battery is increased, affecting the rate performance, discharge capacity, and service life of the secondary battery.

According to some embodiments of this application, adhesion between the negative active material layer and the current collector is 3 N/m to 30 N/m. The adhesion between the negative active material layer and the current collector being within this range can further improve the rate performance, fast charging performance, and cycling performance of the secondary battery. If the adhesion between the negative active material layer and the current collector is excessively low, demolding and burrs easily occur in a rolling or slitting process, leading to potential safety hazards of the secondary battery. Excessively high adhesion between the negative active material layer and the current collector results in an excessively large adhesion strength between the active material and the current collector and a high proportion of a binder, causing high internal resistance of the secondary battery, serious kinetic loss, and faster attenuation of long-term cycling performance.

A third aspect of this application provides an electronic apparatus including the secondary battery according to the second aspect.

According to this application, the composite particle is provided with the first region and the second region, where the first region includes the disordered carbon structure and the second region includes the ordered carbon structure and/or a metal oxide structure, not only maintaining the capacity level of the negative active material but also increasing the compacted density of the negative active material layer and the energy density of the secondary battery. The second region including the ordered structure can further improve internal diffusion kinetics of the negative active material, so that the secondary battery has a high active ion diffusion coefficient in a later charge/discharge period, thereby improving the fast charging capability, rate performance, and cycling performance of the secondary battery. In addition, a preparation method involved in this application is simple, easy to operate and control, and applicable to industrial production.

## BRIEF DESCRIPTION OF DRAWINGS

FIG. 1 is a TEM image of a negative active material in Example 4 of this application.
FIG. 2 is a SEM image of a negative active material in Example 4 of this application.
FIG. 3 is a carbon fine spectrogram of an X-ray photoelectron spectroscopy of a negative active material in Example 4 of this application.
FIG. 4 is a Raman spectrogram of a negative active material in Example 4 of this application.
FIG. 5 is an XRD spectrogram of a negative active material in Example 4 of this application.
FIG. 6 is a schematic diagram of an internal arrangement manner of a negative active material according to some embodiments of this application.

## DESCRIPTION OF EMBODIMENTS

For brevity, this specification specifically discloses only some numerical ranges. However, any lower limit may be combined with any upper limit to form a range not explicitly recorded, and any lower limit may be combined with another lower limit to form a range not explicitly recorded, and likewise, any upper limit may be combined with any other upper limit to form a range not explicitly recorded. In addition, each individually disclosed point or single numerical value, as a lower limit or an upper limit, may be combined with any other point or single numerical value or combined with another lower limit or upper limit to form a range not explicitly recorded.

In the descriptions of this specification, "more than" or "less than" is inclusive of the present number unless otherwise specified.

Unless otherwise specified, terms used in this application have common meanings generally understood by persons skilled in the art. Unless otherwise specified, numerical values of parameters mentioned in this application may be measured by using various measurement methods commonly used in the art (for example, testing may be performed by using a method provided in the embodiments of this application).

A list of items connected by the terms "at least one of", "at least one piece of", "at least one kind of", or the like may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (exclusive of C), A and C (exclusive of B), B and C (exclusive of A), or all of A, B, and C. The item A may include a single constituent or a plurality of constituents. The item B may include a single constituent or a plurality of constituents. The item C may include a single constituent or a plurality of constituents.

The following further describes this application with reference to specific embodiments. It should be understood that these specific embodiments are merely intended to illustrate this application rather than to limit the scope of this application.

I. Negative active material

A negative active material provided by this application includes composite particles, where the composite particle includes a first region and a second region, the first region includes a disordered carbon structure, the second region includes an ordered carbon structure and/or a metal oxide structure, and a surface of the composite particle includes the first region. The inventors of this application have found through research that for the first region including the disordered carbon structure, for example, a hard carbon material region, as disordered amorphous graphite, the region has a disorderly-arranged internal structure and lots of pore structures, resulting in low true density and compacted density thereof. According to this application, the composite particle is provided with the first region including the disordered carbon structure and the second region including the ordered structure, maintaining the capacity level of the negative active material. In addition, the tightly arranged second regions can effectively increase the compacted density of the negative active material, thereby increasing the energy density of the secondary battery. In addition, the second region including the ordered structure can further effectively reduce a free path for the active ions and increase a solid-state diffusion rate of the active ions, thereby improving internal diffusion kinetics of the negative active material, reducing internal polarization of the negative active material, and improving the fast charging capacity, rate performance, and cycling performance of the secondary battery. In some embodiments, surfaces of the composite particles are all first regions having the disordered carbon structures.

In this application, the "disordered carbon structure" refers to a carbon structure with a low graphitization degree and an approximate amorphous shape (or with no fixed shape or periodic structure rule). The "ordered carbon structure" refers to a carbon structure with a high graphitization degree or a fixed shape and periodic structure rule.

The "first region" in this application may be a region including a disordered carbon structure on the surface of the composite particle.

According to some embodiments of this application, the first region includes a first active material, where the first active material includes hard carbon and/or soft carbon. Compared with soft carbon, hard carbon has a larger d002 interplanar spacing and more micropores after a thermal treatment at 1000°C or a higher temperature and thus can provide more active ion deintercalation sites. In some embodiments, the first active material includes hard carbon.

According to some embodiments of this application, the second region includes a second active material, where the second active material includes at least one of graphite, graphene, carbon nanotubes, lithium oxide, or a transition metal oxide. In some embodiments, the lithium oxide includes at least one of lithium transition metal composite oxides.

The "transition metal" in this application includes at least one of chromium, manganese, iron, cobalt, nickel, copper, zinc, or titanium. In some embodiments, the lithium oxide includes lithium titanate. In some embodiments, the transition metal oxide includes at least one of ferroferric oxide, trimanganese tetroxide, manganese dioxide, or tricobalt tetraoxide.

According to some embodiments of this application, the second active material has a size of 10 nm to 2000 nm, for example, 10 nm to 1000 nm. In this application, different types of second active materials have different sizes. For example, when the second active material is a graphene material, the size is correspondingly an average flake size of the graphene material; when the second active material is a carbon nanotube material, the size is correspondingly an average diameter of the carbon nanotube material; and when the second region is made of a graphite material, a lithium oxide, or a transition metal oxide, the size is correspondingly an average particle size thereof. To be specific, according to some embodiments of this application, an average particle size of the graphite is 10 nm to 1000 nm, an average flake size of the graphene is 10 nm to 2000 nm, an average diameter of the carbon nanotubes is 10 nm to 2000 nm, an average particle size of the lithium oxide is 10 nm to 1000 nm, and an average particle size of the transition metal oxide is 10 nm to 1000 nm; and preferably, the average particle size of the graphite is 20 nm to 300 nm, the average flake size of the graphene is 20 nm to 500 nm, the average diameter of the carbon nanotubes is 20 nm to 500 nm, the average particle size of the lithium oxide is 20 nm to 300 nm, and the average particle size of the transition metal oxide is 20 nm to 300 nm, where the average diameter of the carbon nanotubes refers to the average of the outer diameter of the carbon nanotubes. Active ions diffuse more easily in the second region including the ordered structure. Therefore, a larger contact area between the first region and the second region can increase an active ion diffusion coefficient of the negative active material. When the second active material has an excessively large size, the contact area between the first region and the second region is small, which is not conducive to diffusion of the active ions. When the second active material has an excessively small size, the active material is likely to agglomerate, affecting the rate performance, fast charging performance, and cycling performance of the secondary battery.

In some embodiments, the average particle size of the graphite is 10 nm, 20 nm, 30 nm, 40 nm, 50 nm, 60 nm, 70 nm, 80 nm, 90 nm, 100 nm, 120 nm, 140 nm, 160 nm, 180 nm, 200 nm, 300 nm, 400 nm, 500 nm, 600 nm, 700 nm, 800 nm, 900 nm, or 1000 nm, or falls within a range defined by any two of these values.

In some embodiments, the average flake size of the graphene is 10 nm, 20 nm, 30 nm, 40 nm, 50 nm, 60 nm, 70 nm, 80 nm, 90 nm, 100 nm, 120 nm, 140 nm, 160 nm, 180 nm, 200 nm, 300 nm, 400 nm, 500 nm, 600 nm, 700 nm, 800 nm, 900 nm, 1000 nm, 1200 nm, 1300 nm, 1400 nm, 1500 nm, 1600 nm, 1700 nm, 1800 nm, or 1900 nm, or falls within a range defined by any two of these values.

In some embodiments, the average diameter of the carbon nanotubes is 10 nm, 20 nm, 30 nm, 40 nm, 50 nm, 60 nm, 70 nm, 80 nm, 90 nm, 100 nm, 120 nm, 140 nm, 160 nm, 180 nm, 200 nm, 300 nm, 400 nm, 500 nm, 600 nm, 700 nm, 800 nm, 900 nm, 1000 nm, 1200 nm, 1300 nm, 1400 nm, 1500 nm, 1600 nm, 1700 nm, 1800 nm, or 1900 nm, or falls within a range defined by any two of these values.

In some embodiments, the average particle size of the lithium oxide is 10 nm, 20 nm, 30 nm, 40 nm, 50 nm, 60 nm, 70 nm, 80 nm, 90 nm, 100 nm, 120 nm, 140 nm, 160 nm, 180 nm, 200 nm, 300 nm, 400 nm, 500 nm, 600 nm, 700 nm, 800 nm, 900 nm, or 1000 nm, or falls within a range defined by any two of these values.

In some embodiments, the average particle size of the transition metal oxide is 10 nm, 20 nm, 30 nm, 40 nm, 50 nm, 60 nm, 70 nm, 80 nm, 90 nm, 100 nm, 120 nm, 140 nm, 160 nm, 180 nm, 200 nm, 300 nm, 400 nm, 500 nm, 600 nm, 700 nm, 800 nm, 900 nm, or 1000 nm, or falls within a range defined by any two of these values.

According to some embodiments of this application, the second region is in disordered distribution or layered distribution inside the composite particle. In some embodiments, the layered distribution is single-layer distribution or multi-layer distribution, where the multi-layer distribution is, for example, double-layer distribution, three-layer distribution, or four-layer distribution. Different distribution manners of the second region inside the composite particle can effectively reduce the free path for the active ions, increase a solid-state diffusion rate of the active ions, and reduce internal polarization of the negative active material, thereby further improving the rate performance, fast charging performance, and cycling performance of the secondary battery.

According to some embodiments of this application, the composite particles are primary particles. In some embodiments, the particle size of the composite particle satisfies $3 \ \mu m \leq D_v 50 \leq 12 \ \mu m$. In some embodiments, $D_v 50$ is 3 $\mu m$, 4 $\mu m$, 5 $\mu m$, 6 $\mu m$, 7 $\mu m$, 8 $\mu m$, 9 $\mu m$, 10 $\mu m$, 11 $\mu m$, or 12 $\mu m$, or falls within a range defined by any two of these values. In this application, $D_v 50$ indicates a particle size in volume-based particle size distribution, where particles sizes of 50% of the composite particles are less than this particle size. If the composite particle has an excessively large particle size, the electrolyte has poor infiltration. If the composite particle has an excessively small particle size, a specific surface area is increased, and more SEI films are formed on the surface of the composite particle during the first charge, increasing consumption of active ions, and thus effecting the cycling performance and rate performance of the secondary battery.

According to some embodiments of this application, an X-ray photoelectron spectroscopy pattern of the negative active material shows a characteristic peak within a range of 283 eV to 288 eV. In this application, the characteristic peak with a binding energy within the range of 283 eV to 288 eV corresponds to a characteristic peak of the disordered carbon structure in the first region.

According to some embodiments of this application, the negative active material has an ID/IG of 0.6 to 1.3, where ID represents a peak intensity within a wavenumber of 1300 cm$^{-1}$ to 1400 cm$^{-1}$ during a Raman spectrum test, and IG represents a peak intensity within a wavenumber of 1550 cm$^{-1}$ to 1650 cm$^{-1}$ during a Raman spectrum test.

According to some embodiments of this application, an X-ray diffraction pattern of the negative active material shows a characteristic peak when $2\theta$ is within a range of 18° to 30°. In this application, the characteristic peak of the X-ray diffraction pattern of the negative active material when $2\theta$ is within a range of 18° to 30° corresponds to the disordered carbon structure in the first region. In some embodiments, a full width at half maximum of the characteristic peak is 4° to 12°.

According to some embodiments of this application, an X-ray diffraction pattern of the negative active material shows a characteristic peak when $2\theta$ is within a range of 26° to 27°. In this application, the characteristic peak of the X-ray diffraction pattern of the negative active material when $2\theta$ is within a range of 26° to 27° corresponds to the graphite or carbon nanotubes (CNT) with an ordered carbon structure in the second region.

According to some embodiments of this application, an X-ray diffraction pattern of the negative active material shows a characteristic peak when $2\theta$ is within at least one of the following ranges: 18° to 19°, 35° to 36°, or 43° to 44°. In this application, the characteristic peak of the X-ray diffraction pattern of the negative active material when $2\theta$ is within a range of 18° to 19°, 35° to 36°, or 43° to 44° corresponds to lithium titanate with an ordered structure in the second region. In some embodiments, an X-ray diffraction pattern of the negative active material shows an obvious sharp peak when $2\theta$ is 18.4°, 35.7°, or 43.3°, and the peak corresponds to lithium titanate with an ordered structure in the second region.

According to some embodiments of this application, an X-ray diffraction pattern of the negative active material shows a characteristic peak when $2\theta$ is within at least one of the following ranges: 30° to 31°, 35° to 36°, 42.5° to 43.5°, 56.5° to 57.5°, or 62° to 63°. In this application, the characteristic peak of the X-ray diffraction pattern of the negative active material when $2\theta$ is within a range of 30° to 31°, 35° to 36°, 42.5° to 43.5°, 56.5° to 57.5°, or 62° to 63° corresponds to ferroferric oxide with an ordered structure in the second region. In some embodiments, an X-ray diffraction pattern of the negative active material shows an obvious sharp peak when $2\theta$ is 30.2°, 35.5°, 43.1°, 57.1°, or 62.6°, and the peak corresponds to ferroferric oxide with an ordered structure in the second region.

According to some embodiments of this application, a specific surface area of the negative active material is 1 m$^2$/g to 50 m$^2$/g. In some embodiments, the specific surface area of the negative active material is 2.5 g/cm$^2$, 3 g/cm$^2$, 4 g/cm$^2$, 5 g/cm$^2$, 6 g/cm$^2$, 7 g/cm$^2$, 8 g/cm$^2$, 9 g/cm$^2$, 10 g/cm$^2$, 12 g/cm$^2$, 15 g/cm$^2$, 20 g/cm$^2$, 25 g/cm$^2$, 30 g/cm$^2$, 35 g/cm$^2$, 40 g/cm$^2$, or 45 g/cm$^2$, or falls within a range defined by any two of these values. In some embodiments, the specific surface area of the negative active material is 2 m$^2$/g to 10 m$^2$/g. When the negative active material has an excessively large specific surface area, a large number of SEI films are likely to be formed on the surface of the negative active material in the first-cycle charge/discharge process of the secondary battery, leading to capacity loss of the secondary battery. In addition, a larger amount of binder needs to be added into a negative active material layer for the negative active material with a large specific surface area, which increases internal resistance of the negative active material layer, thus affecting the fast charging performance of the secondary battery.

According to some embodiments of this application, the negative active material may further include other negative active materials other than the composite particle. The specific type of the other negative active materials is not specifically limited, and can be selected as required. In an example, the other negative active materials include but are not limited to at least one of soft carbon such as natural graphite or artificial graphite, silicon, a silicon-carbon composite, SiO, Li-Sn alloy, Li-Sn-O alloy, Sn, SnO, $SnO_2$, spinel-structure $Li_4Ti_5O_{12}$, or Li-Al alloy.

II. Preparation method of composite particle

A preparation method for negative active material provided by this application includes the following steps.

S1. Mix a second active material for forming a second region, resin, a solvent, and an optional curing agent, to obtain a first mixture.

S2. Dry, for example, spray-dry the first mixture to obtain a precursor A containing the second active material.

S3. Mix the precursor A with the resin, solvent, and optional curing agent to obtain a second mixture.

S4. Dry, for example, spray-dry the second mixture to obtain a precursor B.

S5. Carbonize the precursor B to obtain the composite particle.

According to some embodiments of this application, in S1, a mass ratio of the second active material, the resin, the solvent, and the curing agent is a1:a2:a3:a4, where a1:a2 is 0.01 to 0.6, a3:a2 is 0.2 to 3, and a4:a2 is 0 to 0.5. In some embodiments, the mixing in S1 includes adding the solvent into the second active material for forming the second region, performing ultrasonic dispersion, for example, performing dispersion for 1 h to 3 h, then adding the resin and the curing agent in sequence, and mixing them using a mixer, for example, mixing for 0.5 h to 3 h.

According to some embodiments of this application, in S3, a mass ratio of the precursor A, the resin, the solvent, and the curing agent is b1:b2:b3:b4, where b2:b1 is 0.3 to 5, b3:b2 is 0.2 to 7, and b4:b2 is 0 to 0.5.

The preparation method of composite particle provided by this application further includes the following steps.

M1. Mix a second active material for forming a second region, resin, a solvent, hard carbon, and an optional curing agent, to obtain a first mixture.

M2. Dry, for example, spray-dry the first mixture to obtain a precursor A1 containing the second active material.

M3. Mix the precursor A1 with the resin, solvent, and optional curing agent to obtain a second mixture.

M4. Dry, for example, spray-dry the second mixture to obtain a precursor B1.

M5. Carbonize the precursor B1 to obtain the composite particle.

The preparation method of composite particle provided by this application further includes the following steps.

N1. Mix a second active material for forming a second region, resin, a solvent, hard carbon, and an optional curing agent, to obtain a first mixture.

N2. Dry, for example, spray-dry the first mixture to obtain a precursor A2.

N3. Mix the precursor A2 with the resin, solvent, and optional curing agent to obtain a second mixture.

N4. Dry, for example, spray-dry the second mixture to obtain a precursor B2.

N5. Mix the precursor B2 with the resin, solvent, second active material, and optional curing agent to obtain a third mixture.

N6. Dry, for example, spray-dry the third mixture to obtain a precursor C.

N7. Mix the precursor C with the resin, solvent, and optional curing agent to obtain a fourth mixture.

N8. Dry, for example, spray-dry the fourth mixture to obtain a precursor D.

N9. Optionally repeat the steps N5 to N8 at least once to obtain a precursor E.

N10. Carbonize the precursor D or E to obtain the composite particle.

According to some embodiments of this application, in M1 and N1, a mass ratio of the second active material, the resin, the solvent, the curing agent, and the hard carbon is c1:c2:c3:c4:c5, where c1:c2 is 0.01 to 3, c3:c2 is 0.2 to 7, c4:c2 is 0 to 0.5, and c5:c2 is 1 to 15. According to some embodiments of this application, in N5, a mass ratio of the second active material, the resin, the solvent, the curing agent, and the precursor is d1:d2:d3:d4:d5, where d1:d2 is 0.01 to 3, d3:d2 is 0.2 to 7, d4:d2 is 0 to 0.5, and d5:d2 is 1 to 20. In some embodiments, the mixing in M1, N1 and N5 includes adding the solvent into the second active material for forming the second region, performing ultrasonic dispersion, for example, performing dispersion for 1 h to 3 h, then adding the resin, the curing agent, the hard carbon, or the precursor in sequence, and mixing them using a mixer for 0.5 h to 3 h.

According to some embodiments of this application, in M3, N3 and N7, a mass ratio of the precursor, the resin, the solvent, and the curing agent is e1:e2:e3:e4, where e2:e1 is 0.1 to 1, e3:e2 is 0.5 to 3, and e4:e2 is 0 to 0.5.

According to some embodiments of this application, during spray-drying, an inlet air temperature is set to be 130°C to 300°C, and an outlet air temperature is set to be 50°C to 150°C.

According to some embodiments of this application, the carbonization includes first carbonization and second carbonization that are performed in sequence in an inert atmosphere. In some embodiments, the first carbonization is performed at a temperature of 250°C to 650°C. In some embodiments, the first carbonization is performed for 1 h to 4 h. In some embodiments, the second carbonization is performed at a temperature of 700°C to 1600°C. In some embodiments, the second carbonization is performed for 1 h to 12 h.

According to some embodiments of this application, the resin includes at least one of A-stage phenolic resin, epoxy resin, vinyl resin, bismaleamide resin, thermosetting polyimide resin, or cyanate ester. In some embodiments, the solvent includes at least one of water, ethanol, methanol, acetone, dichloromethane, N-methylpyrrolidone, N,N-dimethylformamide, or N,N-dimethyl acetamide, where the solvent is specifically selected depending on the resin selected. In some embodiments, the curing agent includes at least one of vinyl triamine, aminoethyl piperazine, metaphenylene diamine, diaminodiphenyl-methane, or hexamethylene tetramine. In some embodiments, the curing agent may not be used, which specifically depends on a resin system selected.

III. Secondary battery

The secondary battery provided by this application includes a negative electrode, where the negative electrode includes a negative active material layer and a current collector, and the negative active material layer includes the negative active material according to the first aspect.

According to some embodiments of this application, a porosity of the negative active material layer is 10% to 50%. In some embodiments, a porosity of the negative active material layer is 15%, 20%, 25%, 30%, 35%, 40%, 45%, or in a range defined by any two of these values. In some embodiments, a porosity of the negative active material layer is 15% to 35%. The porosity of the negative active material layer being within this range can further improve the rate performance, fast charging performance, and cycling performance of the secondary battery. If the negative active material layer has an excessively large porosity, particles of the negative active material have less contact points, resulting in an increase in internal resistance of the secondary battery. However, an excessively small porosity of the negative active material layer may cause poor infiltration of an electrolyte and a longer transmission path for the active ions, hindering migration of the active ions between a positive electrode and a negative electrode, and thus a negative electrode plate in no contact with the electrolyte cannot participate in an electrochemical reaction inside the secondary battery. In addition, interface resistance of the secondary battery is increased, affecting the rate performance, cycling performance, discharge capacity, and service life of the secondary battery.

In some embodiments, adhesion between the negative active material layer and the current collector is 3 N/m to 30 N/m, for example, 5 N/m, 10 N/m, 15 N/m, 20 N/m, or 25 N/m. The adhesion between the negative active material layer and the current collector being within this range can further improve the rate performance, fast charging performance, and cycling performance of the secondary battery. If the adhesion between the negative active material layer and the current collector is excessively low, demolding and burrs easily occur in a rolling or slitting process, leading to potential safety hazards of the secondary battery. Excessively high adhesion between the negative active material layer and the current collector results in an excessively large adhesion strength between the active material and the current collector and a high proportion of a binder. This is likely to cause high internal resistance of the secondary battery, serious kinetic loss, and faster attenuation of long-term cycling performance.

In some embodiments, a negative electrode current collector includes copper foil, aluminum foil, nickel foil, stainless steel foil, titanium foil, nickel foam, copper foam, a polymer substrate coated with conductive metal, or any combination thereof.

In some embodiments, the negative active material layer further includes a binder and a conductive agent. In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene 1,1-difluoride, polyethylene, polypropylene, styrene-butadiene rubber, acrylic(acrylate) styrene-butadiene rubber, epoxy resin, or nylon.

In some embodiments, the conductive agent includes but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fibers, or any combination thereof. In some embodiments, the metal-based material is selected from metal powder, metal fibers, copper, nickel, aluminum, or silver. In some embodiments, the conductive polymer is a polyphenylene derivative.

The negative electrode in this application may be prepared by using a commonly known method in the art. Generally, a negative active material, an optional conductive agent (for example, a carbon material such as carbon black, and metal particles), a binder (for example, SBR), another optional additive (for example, a PTC thermistor material), and other materials are mixed and dispersed in a solvent (for example, deionized water), and the resulting mixture is stirred to uniformity and then uniformly applied on a negative electrode current collector, followed by drying, to obtain a negative electrode.

The secondary battery of this application further includes a positive electrode. The positive electrode includes a positive electrode current collector and a positive active material layer, where the positive active material layer includes a positive active material, a binder, and a conductive agent.

According to some embodiments of this application, the positive electrode current collector may be a metal foil or a composite current collector. For example, aluminum foil may be used. The composite current collector may be formed by forming a metal material (copper, copper alloy, nickel, nickel alloy, titanium, titanium alloy, silver, silver alloy, or the like) on a polymer matrix.

According to some embodiments of this application, the positive active material includes at least one of lithium cobaltate, lithium nickel manganese cobaltate, lithium nickel manganese aluminate, lithium iron phosphate, lithium vanadium phosphate, lithium cobalt phosphate, lithium manganese phosphate, lithium ferromanganese phosphate, lithium iron silicate, lithium vanadium silicate, lithium cobalt silicate, lithium manganese silicate, spinel-type lithium manganate, spinel-type lithium nickel manganate, or lithium titanate. In some embodiments, the binder includes a binder polymer, for example, at least one of polyvinylidene fluoride, polytetrafluoroethylene, polyolefins, sodium carboxymethyl cellulose, lithium carboxymethyl cellulose, modified polyvinylidene fluoride, modified SBR, or polyurethane. In some embodiments, the polyolefin binder includes at least one of polyethylene, polypropylene, polyvinyl ester, polyvinyl alcohol, or polyacrylic acid. In some embodiments, the conductive agent include a carbon-based material such as natural graphite, artificial graphite, carbon black, acetylene black, Ketjen black, or carbon fibers; a metal-based material such as metal powder or metal fibers containing copper, nickel, aluminum, or silver; a conductive polymer such as a polyphenylene derivative; or any mixture thereof.

The positive electrode of this application may be prepared by using a commonly known method in the art. Generally, a positive active material, a conductive material, and a binder are mixed and dispersed in a solvent, and the resulting mixture is stirred to uniformity and then applied on a positive electrode current collector, followed by drying, to obtain a positive electrode. In some embodiments, the solvent may include but is not limited to N-methylpyrrolidone. The secondary battery of this application further includes a separator. The material or shape of the separator used in the secondary battery of this application is not particularly limited, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, membrane, or composite membrane having a porous structure, and the substrate layer is made of a material selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic layer, or may be a layer formed by mixing a polymer and an inorganic substance. The inorganic substance layer includes inorganic particles and the binder. The inorganic particles are selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, a vinylidene fluoride-hexafluoropropylene copolymer, polyamide, polyacrylonitrile, polyacrylic ester, polyacrylic acid, polyacrylate, polyvinylpyrrolidone, polyethylene oxide, polymethyl methacrylate, polytetrafluoroethylene, or polyhexafluoropropylene. The polymer layer includes a polymer, and the polymer is made of a material selected from at least one of polyamide, polyacrylonitrile, an acrylate polymer, polyacrylic acid, polyacrylate, polyvinylpyrrolidone, polyethylene oxide, polyvinylidene fluoride, or poly(vinylidene fluoride-hexafluoropropylene).

The secondary battery of this application further includes an electrolyte. The electrolyte that can be used in this application may be an electrolyte known in the prior art.

According to some embodiments of this application, the electrolyte includes an organic solvent, a lithium salt, and an optional additive. The organic solvent of the electrolyte in this application may be any organic solvent known in the prior art which can be used as a solvent of the electrolyte. An electrolytic salt used in the electrolyte according to this application is not limited, and may be any electrolytic salt known in the prior art. The additive of the electrolyte according to this application may be any additive known in the prior art which can be used as an additive of the electrolyte. In some embodiments, the organic solvent includes but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, at least one of 1,3-dioxolane (DOL) or ethylene glycol dimethyl ether (DME). In some embodiments, the lithium salt includes at least one of an organic lithium salt or an inorganic lithium salt. In some embodiments, the lithium salt includes but is not limited to: lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$(LiTFSI), lithium bis(fluorosulfonyl)imide $Li(N(SO_2F)_2)$(LiFSI), lithium bis(oxalate) borate $LiB(C_2O_4)_2$(LiBOB), or lithium difluoro(oxalato)borate $LiBF_2(C_2O_4)$(LiDFOB). In some embodiments, the additive includes at least one of fluoroethylene carbonate or adiponitrile.

According to some embodiments of this application, the secondary battery of this application includes but is not limited to a lithium-ion battery or a sodium-ion battery. In some embodiments, the secondary battery includes a lithium-ion battery.

IV. Electronic apparatus

This application further provides an electronic apparatus including the secondary battery according to the third aspect of this application.

The electronic device or apparatus in this application is not particularly limited. In some embodiments, the electronic device of this application includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

In the following examples and comparative examples, all reagents, materials, and instruments used are commercially available unless otherwise specified.

Examples and Comparative Examples

Example 1

Preparation of positive electrode plate: A positive active material lithium cobaltate, conductive carbon black (Super P), and polyvinylidene fluoride (PVDF) were mixed at a mass ratio of 97:1.4:1.6, N-methylpyrrolidone (NMP) was added as a solvent, and the resulting mixture was stirred to uniformity to obtain a slurry. The slurry (with a solid content of 72 wt%) was uniformly applied on a positive electrode current collector aluminum foil, with a coating thickness of 80 $\mu$m, and was dried at 85°C. Then, after cold pressing, cutting, and slitting, drying was performed in vacuum at 85°C for 4 h to obtain a positive electrode plate.

Preparation of negative electrode plate: Composite particles, a binder styrene-butadiene rubber, and sodium carboxymethyl cellulose (CMC) were dissolved at a mass ratio of 97:1.5:1.5 in deionized water to form a negative electrode slurry (with a solid content of 40 wt%). A copper foil with a thickness of 10 $\mu$m was used as the negative electrode current collector. The negative electrode slurry was applied on the current collector of the negative electrode plate, with a coating thickness of 50 $\mu$m, and was dried at 85°C. Then, after cold pressing, cutting, and slitting, drying was performed in vacuum at 120°C for 12 h to obtain a negative electrode plate.

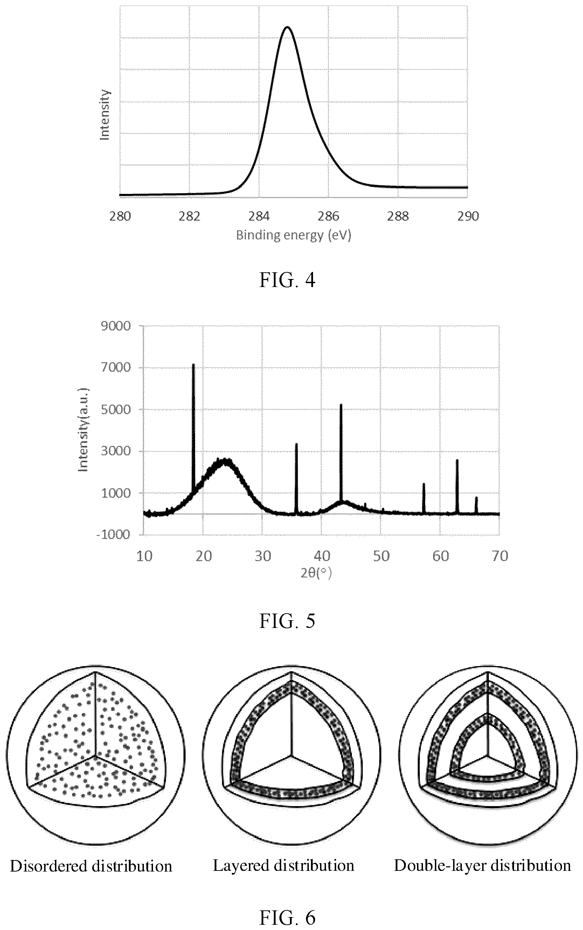

The composite particle was prepared according to the following steps: Nano graphite microbeads with an average particle size of 100 nm, A-stage phenolic resin, ethanol, and hexamethylene tetramine were mixed at a mass ratio of 10:100:100:5 to prepare a solution mixture (first, the second active material nano graphite microbeads were added into the ethanol solvent and subjected to ultrasonic dispersion for 2 h, and then the A-stage phenolic resin and the hexamethylene tetramine were added in sequence and mixed in a mixer for 1 h), and then the solution mixture was spray-dried, where during spraying, an inlet air temperature was set to be 200°C and an outlet air temperature was set to be 130°C, to obtain a precursor A containing the second active material. The precursor A obtained after primary spraying, phenolic resin, ethanol, and hexamethylene tetramine were mixed at a mass ratio of 100:50:50:5 to prepare a solution mixture (the precursor A, the phenolic resin, the ethanol and the hexamethylene tetramine were mixed in a mixer for 1 h), and then the solution mixture was spray-dried, where during spraying, an inlet air temperature was set to be 200°C and an outlet air temperature was set to be 130°C, to obtain a precursor B. The precursor B was pre-carbonized at 600°C for 1.5 h in a nitrogen atmosphere and then carbonized at 1100°C for 2 h in the nitrogen atmosphere to obtain a composite particle, where the composite particle has a structure similar to that shown in a left diagram of FIG. 6 and contains nano graphite as the second active material, and the nano graphite is in disordered distribution inside the composite particle.

Preparation of separator: The separator was made of polyethylene (PE) with a thickness of 7 $\mu$m.

Preparation of electrolyte: In a dry argon atmosphere glove box, ethylene carbonate (EC), propylene carbonate (PC), and diethyl carbonate (DEC) were mixed at a mass ratio of EC:PC:DEC=1:1:1, then a lithium salt $LiPF_6$ and fluoroethylene carbonate were added, and the resulting mixture was mixed to uniformity to obtain an electrolyte, where based on a mass of the electrolyte, a mass percentage of $LiPF_6$ was 12.5%, and a mass percentage of fluoroethylene carbonate was 5%.

Preparation of lithium-ion battery: The positive electrode plate, the separator, and the negative electrode plate were sequentially stacked so that the separator was sandwiched between the positive electrode plate and the negative electrode plate for separation, and the stack was wound to obtain an electrode assembly. The electrode assembly was placed into an outer packaging aluminum-plastic film, dehydrated at 80°C. Then, the foregoing electrolyte was injected and packaging was performed, followed by processes such as formation, degassing, and trimming, to obtain a lithium-ion battery.

Example 2

Example 2 has the same parameters as Example 1 except that the second active material in the composite particle is graphene.

Example 3

Example 3 has the same parameters as Example 1 except that the second active material in the composite particle is carbon nanotubes.

Example 4

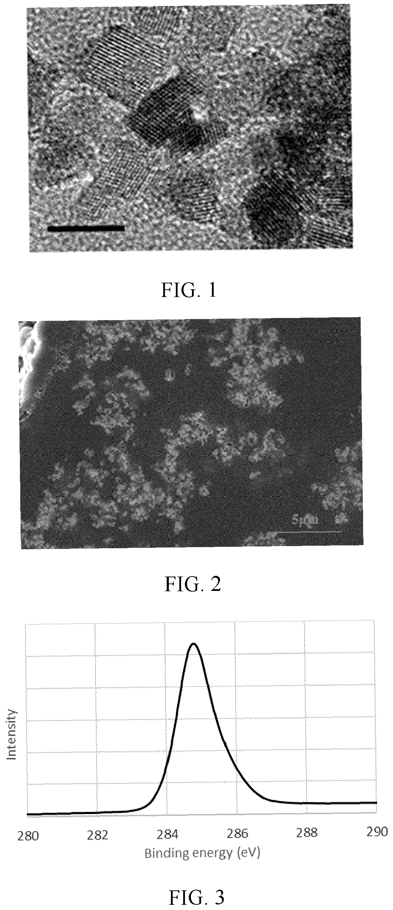

Example 4 has the same parameters as Example 1 except that the second active material in the composite particle is lithium titanate. As shown in FIG. 1, after the composite particle obtained in this embodiment is cut into ultrathin pieces, clearly distinguished lattice stripes can be observed under a high-resolution transmission electron microscope, where regions stacked disorderedly are the lattice stripes having a disordered carbon structure in the first region of the composite particle, and regions stacked orderly are the lattice stripes having an ordered structure in the second region of the composite particle.

As shown in FIG. 2, when a cross section of the negative electrode plate of the composite particle obtained in this embodiment is being observed under a scanning electron microscope, it can be seen that a dark grey part is hard carbon, a light grey part is lithium titanate particles, and the lithium titanate particles are in disordered distribution in the composite particle.

As shown in FIG. 3, a carbon fine spectrogram of an X-ray photoelectron spectroscopy of the composite particle obtained in this embodiment shows a characteristic peak within a range of 283 eV to 288 eV, where the characteristic peak corresponds to a characteristic peak of the disordered carbon structure in the first region.

As shown in FIG. 4, in a Raman spectrogram of the composite particle obtained in this embodiment, ID/IG is about 0.7, where ID represents a peak intensity within a range of 1300 $cm^{-1}$ to 1400 $cm^{-1}$, and IG represents a peak intensity within a range of 1550 $cm^{-1}$ to 1650 $cm^{-1}$.

As shown in FIG. 5, an XRD spectrogram of the composite particle obtained in this embodiment shows a sharp characteristic peak within ranges of 8° to 19°, 35° to 36°, and 43° to 44° respectively, where the sharp characteristic peak corresponds to lithium titanate having an ordered structure in the second region.

Example 5

Example 5 has the same parameters as Example 1 except that the second active material in the composite particle is ferroferric oxide.

Comparative Example 1

Comparative Example 1 has the same parameters as Example 1 except that no second active material is added during preparation of the composite particle and the composite particle is a pure hard carbon material.

Comparative Example 2

The negative active material in Comparative Example 2 is artificial graphite.

Example 6

Example 6 has the same parameters as Example 1 except that the second active material in the composite particle is graphite with an average particle size of 30 nm.

Example 7

Example 7 has the same parameters as Example 1 except that the second active material in the composite particle is graphite with an average particle size of 300 nm.

Example 8

Example 8 has the same parameters as Example 1 except that the second active material in the composite particle is graphite with an average particle size of 500 nm.

Example 9

Example 9 has the same parameters as Example 1 except that the second active material in the composite particle is graphite with an average particle size of 1000 nm.

Example 10

In Example 10, the composite particle was prepared according to the following steps: Nano lithium titanate microbeads with an average particle size of 100 nm, A-stage phenolic resin, ethanol, hexamethylene tetramine, and hard carbon microbeads with $D_v50$ of 8 $\mu$m were mixed at a mass ratio of 10:10:50:1:100 to prepare a solution mixture (first, the second active material nano lithium titanate microbeads were added into the ethanol and subjected to ultrasonic dispersion for 2 h, and subsequently the A-stage phenolic resin, the hexamethylene tetramine and the hard carbon microbeads were added in sequence and mixed in a mixer for 1 h); afterwards, the solution mixture was spray-dried, where during spraying, an inlet air temperature was set to be 200°C, and an outlet air temperature was set to be 130°C; and then a precursor A1 containing the second active material was obtained. The precursor A1 obtained after primary spraying, A-stage phenolic resin, ethanol and hexamethylene tetramine were mixed at a mass ratio of 100:50:50:5 to prepare a solution mixture (first, the precursor A1, the A-stage phenolic resin, the ethanol and the hexamethylene tetramine were mixed in a mixer for 1 h); afterwards, the solution mixture was spray-dried, where during spraying, an inlet air temperature was set to be 200°C, and an outlet air temperature was set to be 130°C; and then a precursor B1 was obtained. The precursor B1 was pre-carbonized at 600°C for 1.5 h in a nitrogen atmosphere and then carbonized at 1100°C for 2 h in the nitrogen atmosphere to obtain a composite particle, where the composite particle has a structure similar to that shown in a middle diagram of FIG. 6 and contains nano lithium titanate as the second active material, and the nano lithium titanate is in layered distribution inside the composite particle.

Example 11

In Example 11, the composite particle was prepared in a way similar to that in Example 10, specifically as follows: Nano lithium titanate microbeads with an average particle size of 100 nm, A-stage phenolic resin, ethanol, hexamethylene tetramine, and hard carbon microbeads with $D_v50$ of 5 $\mu$m were mixed at a mass ratio of 10:10:50:1:100 to prepare a solution mixture (first, the second active material nano lithium titanate microbeads were added into the ethanol and subjected to ultrasonic dispersion for 2 h, and subsequently the A-stage phenolic resin, the hexamethylene tetramine and the hard carbon microbeads were added in sequence and mixed in a mixer for 1 h); afterwards, the solution mixture was spray-dried, where during spraying, an inlet air temperature was set to be 200°C, and an outlet air temperature was set to be 130°C; and then a precursor A2 containing the second active material was obtained. The precursor A2 obtained after primary spraying, A-stage phenolic resin, ethanol and hexamethylene tetramine were mixed at a mass ratio of 100:25:25:2.5 to prepare a solution mixture (first, the precursor A2, the A-stage phenolic resin, the ethanol and the hexamethylene tetramine were mixed in a mixer for 1 h); afterwards, the solution mixture was spray-dried, where during spraying, an inlet air temperature was set to be 200°C, and an outlet air temperature was set to be 130°C; and then a precursor B2 was obtained. The precursor B2 obtained after secondary spraying, nano lithium titanate microbeads with an average particle size of 100 nm, A-stage phenolic resin, ethanol, and hexamethylene tetramine were mixed at a mass ratio of 100:10:10:50:1 to obtain a solution mixture, and the foregoing mixing procedure and spray-drying procedure were repeated to obtain a precursor C. The precursor C obtained after tertiary spraying, A-stage phenolic resin, ethanol and hexamethylene tetramine were mixed at a mass ratio of 100:25:25:2.5 to obtain a solution mixture, and the foregoing mixing procedure and spray-drying procedure were repeated to obtain a precursor D. The precursor D was carbonized under a condition similar to that in Example 10 to obtain a composite particle, where the structure of the composite particle is similar to that shown in a right diagram of FIG. 6 and contains nano lithium titanate as the active material, and the nano lithium titanate is in double-layer distribution inside the composite particle.

Example 12

In Example 12, the composite particle was prepared according to the following steps: Nano lithium titanate microbeads with an average particle size of 100 nm, A-stage phenolic resin, ethanol, hexamethylene tetramine, and hard carbon microbeads with $D_v50$ of 12 $\mu$m were mixed at a mass ratio of 10:5:50:0.5:100 to prepare a solution mixture (first, the nano lithium titanate microbeads were added into the ethanol and subjected to ultrasonic dispersion for 2 h, and subsequently the A-stage phenolic resin, the hexamethylene tetramine and the hard carbon microbeads were added in sequence and mixed in a mixer for 1 h); afterwards, the solution mixture was spray-dried, where during spraying, an inlet air temperature was set to be 200°C, an outlet air temperature was set to be 130°C; then a precursor E was obtained; the precursor E was carbonized under a condition similar to that in Example 10 to obtain a composite particle, where the composite particle contained nano lithium titanate as the active material, and the nano lithium titanate was adsorbed on surface of hard carbon.

Test method

Test for related parameters of negative active material

A completely discharged lithium-ion battery was disassembled. A negative electrode was taken out, soaked in DMC (vinyl carbonate) for 20 min, and eluted by DMC and acetone in sequence so that the electrolyte and surface SEI film were removed, and then dried in an oven at 80°C for 12 h to obtain a treated negative electrode plate. Powder on the negative electrode plate was scraped away using a scraper, and the scraped powder was thermally treated in a tubular furnace at 400°C for 4 h under protection of argon to remove the binder adhered to the surface of the negative active material, to obtain the negative active material. The negative active material layer and negative active material obtained were tested as follows.

1. TEM

The negative active material was coated with epoxy resin and cured, and then cut into a size of 50 nm to 70 nm in an ultrathin cutting method to obtain a sample for use. A high-resolution transmission electron microscope was used to observe a cross section of the particle sample, where distribution of long-range orderly arranged regions, that are, the second regions, and amorphous regions (long-range-free ordered sheet layers that are arranged disorderedly), that are, the first regions was observed.

2. SEM

A preparation process of a negative electrode ion ground (Cross-section) sample: The treated negative electrode plate was cut into a size of 0.5 cm×1 cm; the negative electrode cut was pasted on a silicon slice carrier with a size of 1 cm×1.5 cm by using a conductive adhesive; and then an end of the negative electrode plate was subjected to argon ion polishing (parameters: at an acceleration voltage of 8 KV, each sample being treated for 4 h). In argon ion polishing, a high-voltage electric field was used to ionize argon to generate ions, and the argon ions generated bombard the surface of the negative electrode at a high speed under the action of the acceleration voltage, so as to abrade the negative electrode plate layer by layer to implement a polishing effect.

The scanning electron microscope used in this application is JSM-6360LV type and its matched X-ray spectrometer manufactured by the JEOL company. The scanning electron microscope was used for analyzing profile structure and element distribution of a cross section of the negative electrode plate polished and observing distribution of the second regions and the first regions in the negative active material.

3. Surface defect degree

A surface defect degree of the negative active material was tested using a laser microscope confocal Raman spectrometer, and a ratio ID/IG of a peak intensity ID at 1350 cm$^{-1}$ to a peak intensity IG at 1580 cm$^{-1}$ of the sample was used to represent the surface defect degree of the sample. Each sample was tested for multiple potentials, and a standard deviation of the potentials was used to represent uniformity of surface defect degrees in different regions. The average value and standard deviation of the ID/IG of the negative active material were obtained by using the following method: An unsieved negative active material was taken, 100 points were tested to obtain corresponding ID/IG values, and the average value and standard deviation of these 100 values were calculated.

4. X-ray diffraction (XRD)

An X-ray powder diffractometer (XRD, instrument model: Bruker D8 ADVANCE) was used to test the negative active material, where Cu Kα was used as a target material, voltage and current were 40 KV and 40 mA respectively, a scanning angle was 5° to 80°, a scanning step was 0.00836°, and a time for each scanning step was 0.3s.

5. X-ray photoelectron spectroscopy (XPS)

A powder sample was subjected to XPS full-spectrum scanning to determine spectral peaks of C1s, O1s, C(KLL), and O(KLL); and then chemical shifts of the elements titanium, oxygen, and iron were measured by using a high-resolution spectrum at a scanning width of 10 eV to 30 eV, where binding energy of the elements should be subjected to charge correction, and usually the charge correction amount is comprehensively considered based on C(285 eV), O(532eV), or a specified internal standard element. Finally, the results obtained were fitted using software Xpeak to obtain a result.

6. Particle size of negative active material particle

A Malvern particle size tester was used to measure a particle size of the negative active material particle: The negative active material was dispersed in a dispersant ethanol, and ultrasonicated for 30 min. The sample was put into the Malvern particle size tester to test $D_v50$ of the negative active material particle.

7. Specific surface area of negative active material particle

A specific surface area analyzer (TristarII3020M) was used to measure a specific surface area of the negative active material by using a nitrogen adsorption/desorption method; and the negative active material sample was dried in a vacuum drying oven, and then put into a sample tube for measurement in the analyzer.

8. Gram capacity of negative active material

The negative active material was subjected to mixing, coating, and drying to form a negative electrode plate, a lithium sheet was used as a positive electrode, and they were assembled to form a button cell for test. The button cell was discharged to 5.0 mV at 0.05C, discharged to 5.0 mV at 50 $\mu$A, discharged to 5.0 mV at 10 $\mu$A, and charged to 2.0 V at 0.1C; and a capacity of the button cell at this point was recorded as a gram capacity.

Test for related parameters of negative electrode plate

9. Porosity of negative active material layer

The treated negative electrode plate was made into a complete wafer. 30 samples were tested in each example or comparative example, where each sample had a volume of 0.35 cm$^3$. Porosity of the negative active material layer was tested according to GB/T 24586-2009 Measurement of Iron Ore Apparent Density, True Density and Porosity.

10. Adhesion

The brand of an instrument used in an adhesion test for the negative active material layer and the negative electrode current collector is Instron, with a model of 33652. The treated negative electrode plate (width 30 mm×length (100 mm to 160 mm)) was fixed to a steel plate by using a double-faced adhesive tape (model: 3M9448A, and width 20 mm×length (90 mm to 150 mm)); a paper tape as wide as the negative electrode plate was fixed to a side of the negative electrode plate by using the adhesive tape; a restraint block of a tensile machine was adjusted to an appropriate position; and the paper tape was folded and slid upward 40 mm at a sliding speed of 50 mm/min, to measure adhesion between the negative active material layer and the negative electrode current collector under 180° (that is, stretch in an opposite direction).

11. Compacted density of negative electrode plate

An electronic balance was used to weigh the treated negative electrode plate (two surfaces of the negative electrode current collector were coated with the negative active material layer) with a specific area S, the obtained weight was denoted as W1, and a ten-thousandth micrometer was used to measure a thickness T1 of the negative electrode plate. A solvent was used to wash off the negative active material layer, followed by drying, then the negative electrode current collector was weighed, the obtained weight was denoted as W2, and the ten-thousandth micrometer was used to measure a thickness T2 of the negative electrode current collector. A weight W0 and a thickness T0 of the negative active material layer provided on a side of the negative electrode current collector and the compacted density of the negative active material layer were calculated according to the following formulas:

$$W0=(W1-W2)/2; \quad T0=(T1-T2)/2;$$

, and compacted density=$W0/(T0\times S)$.

Test for related parameters of lithium-ion battery

12. Energy density of lithium-ion battery

Five of each group of lithium-ion batteries in all comparative examples and examples were used for test, and an average value was used. First, the first charge and discharge were performed in an environment at 25°C. Constant-current charge and constant-voltage charge were performed at a charge current of 0.5C until an upper limit voltage was 4.48 V, and then constant-current discharge was performed at a discharge current of 0.2C until a discharge cut-off voltage was 3 V. Percentage increases in the energy densities in the examples and comparative examples with respect to Comparative Example 2 were calculated.

13. Cycling performance of lithium-ion battery

Five of the lithium-ion batteries prepared in each comparative example and each example were used for test, and an average value was used. The lithium-ion battery was repeatedly charged and discharged according to the following steps, and the cycling capacity retention rate and thickness swelling rate of the lithium-ion battery were calculated.
First, the lithium-ion battery was charged and discharged for the first time in an environment at 25°C, where constant-current charge was performed at a charge current of 1C until an upper limit voltage was 4.48 V, and then constant-voltage charge was performed. Then, constant-current discharge was performed at a discharge current of 1C until a final voltage was 3 V, and a first-cycle discharge capacity and a thickness of the fully charged lithium-ion battery were recorded. 400 charge and discharge cycles were performed, and a discharge capacity of the 400$^{th}$ cycle and the thickness of the fully charged lithium-ion battery were recorded.

$$\text{Cycling capacity retention rate}=(\text{discharge capacity of the } 400^{th} \text{ cycle/first-cycle discharge capacity})\times 100\%$$

$$\text{Cycling thickness swelling rate}=(\text{thickness of fully charged lithium-ion battery of the } 400^{th} \text{ cycle/thickness of first-cycle fully charged lithium-ion battery})\times 100\%$$

14. Charge rate performance of lithium-ion battery

Five of each group of lithium-ion batteries were repeatedly charged and discharged according to the following steps, a capacity (average value) in each stage was statistically collected, and a capacity percentage in stage CC was calculated.
Specific steps: First, the lithium-ion battery was left standing in an environment at 25°C for 1 h. The battery was charged to a voltage of 4.48 V at a constant current (CC) at a charge rate of 1C, and then charged at a constant voltage (CV); charge was stopped after a charge current was below 0.05C; and then the battery was left standing for 5 min. Subsequently, the battery was discharged to 3 V at a constant current of 0.2C, and left standing for 5 min to ensure the completeness of a subsequent charge/discharge process. Then, the battery was fully charged at different rates such as 0.2C, 0.5C, 1C, 2C, and 3C under the foregoing CC+CV charge mode, left standing for 5 min, and then discharged until the capacity was zero at a rate of 0.2C, where a cycle was performed once at each rate. Capacity percentages at different charge rates in the stage CC were calculated. As shown in Table 2, in the test, the battery was fully charged at a rate of 3C under the foregoing CC+CV charge mode. The calculation formula: Capacity percentage in stage CC (3C)=[charge capacity in stage CC/(CC+CV) total charge capacity]$\times 100\%$

15. Electrochemical impedance spectrum (EIS) and lithium ion diffusion coefficient

a) Preparation and lithium plating of three-electrode battery are the same as the preparation way of the foregoing lithium-ion battery. During preparation of the lithium-ion battery, a copper wire was connected into the battery as a reference electrode; the negative electrode was plated with lithium for 6 h at a current of 20 μA; and an EIS was tested in an environment at 25°C after lithium plating was ended.

b) Steps for testing EIS: The lithium-plated three-electrode battery was connected to a Bio-LogicVMP3B electrochemical workstation manufactured by the French Bio-Logic company so as to be tested, where a frequency range for the test was 30 mHz to 50 kHz, and an amplitude was 5 mV; and after data was acquired, the data was analyzed using an Impedance Smith Chart to obtain impedance Rct data of the negative electrode of the lithium-ion battery.

c) Under the action of a low-frequency alternating-current signal, the impedance of the battery mainly depends on a mass transfer step; a corresponding Warburg coefficient σ can be calculated according to an alternating-current impedance spectrum curve; a differential value $\frac{dE}{dx}$ of a potential of the negative electrode and a charge state of the battery can be calculated using a coulometric titration method; and a lithium ion diffusion coefficient $D_{Li}$ in the corresponding charge state of the battery was calculated according to the following formula.

$$D_{Li} = \frac{V_M^2}{2S^2F^2\sigma^2}\left(\frac{dE}{dx}\right)^2$$

In the formula, $V_M$ is an average mol volume of the negative active material; S is an effective area of the negative electrode; F is a Faraday constant; and the Warburg coefficient σ is determined based on a slope value of Z'-ω $^{-1/2}$ of a corresponding EIS curve.

A method for calculating the differential value $\frac{dE}{dx}$ of the potential of the negative electrode and the charge state of the battery was: The battery was charged at 0.1C, and left standing for 2 h after being charged every 1 h; and after the voltage was stable, an open-loop voltage of the negative electrode was measured to obtain a charge coulometric titration curve.

The lithium ion diffusion coefficients when the lithium-ion battery is in a 90% charge state were tested for comparison in this application.

Test result

Example 1 to Example 5 and Comparative Example 1 and Comparative Example 2 reflect the influences of the first region and the second region on performance of the lithium-ion battery. The second region is in disordered distribution inside the composite particle, and detailed data are shown in Table 1.

**Table 1**

| Example | First active material | Second active material | Compacted density of negative electrode plate (g/cm³) | Gram capacity (mAh/g) | Impedance Rct (mΩ) | Lithium ion diffusion coefficient (cm²·s⁻¹) | Percentage of energy density with respect to energy density of Comparative Example 2 (%) | Capacity percentage in stage CC (3C) (%) | Cycling capacity retention rate (%) | Cycling thickness swelling rate (%) |
|---|---|---|---|---|---|---|---|---|---|---|
| Example 1 | Hard carbon | Nano graphite | 1.27 | 486 | 15 | $1.2\times10^{-10}$ | 104 | 89 | 94 | 4.2 |
| Example 2 | Hard carbon | Graphene | 1.17 | 459 | 15 | $2.5\times10^{-10}$ | 101 | 90 | 91 | 3.3 |
| Example 3 | Hard carbon | Carbon nanotubes | 1.15 | 443 | 15 | $6.1\times10^{-11}$ | 99 | 88 | 90 | 3.5 |
| Example 4 | Hard carbon | Nano lithium titanate | 1.32 | 432 | 15 | $9.4\times10^{-10}$ | 92 | 92 | 94 | 3.1 |
| Example 5 | Hard carbon | Nano ferroferric oxide | 1.28 | 477 | 15 | $8.4\times10^{-10}$ | 102 | 90 | 90 | 3.2 |
| Comparative Example 1 | Hard carbon | / | 1.10 | 510 | 15 | $1.4\times10^{-11}$ | 105 | 83 | 89 | 3.4 |
| Comparative Example 2 | Graphite | / | 1.60 | 355 | 10 | $5.2\times10^{-10}$ | 100 | 80 | 85 | 11.1 |

It can be seen through comparison between Example 1 to Example 5 and Comparative Example 1 that the lithium ion diffusion coefficients at 90% SOC in Example 1 to Example 5 are all higher than that in Comparative Example 1, indicating that the second region with an ordered structure being introduced into the composite particle including the first region with a disordered structure can effectively increase the solid-phase diffusion coefficient of the lithium ions during later lithium intercalation, with small internal polarization, thereby effectively improving the fast charging performance, rate performance, and cycling performance of the lithium-ion battery. The second active material with an ordered structure has a higher density. Therefore, the negative electrode plates in Example 1 to Example 5 can obtain higher compacted densities in a cold pressing process than that in Comparative Example 1, ensuring a high capacity of the negative electrode, and improving the energy density of the lithium-ion battery.

Example 1 and Example 6 to Example 9 reflect the influences of the average particle size of the second active material on the performance of the lithium-ion battery. The second active material is nano graphite that is in disordered distribution inside the composite particle, and detailed data are shown in Table 2.

**Table 2**

| Example | Second active material | Average particle size of second active material (nm) | Lithium ion diffusion coefficient at 90% SOC ($cm^2 \cdot s^{-1}$) | Capacity percentage in stage CC (3C) (%) | Capacity retention rate after 400 cycles (%) | Lithium battery swelling rate after 400 cycles (%) |
|---|---|---|---|---|---|---|
| Example 1 | | 100 | $1.3 \times 10^{-10}$ | 89 | 94 | 4.2 |
| Example 6 | | 30 | $1.1 \times 10^{-10}$ | 87 | 93 | 4.5 |
| Example 7 | Nano graphite | 300 | $9.0 \times 10^{-11}$ | 87 | 93 | 5.5 |
| Example 8 | | 500 | $6.6 \times 10^{-11}$ | 86.5 | 91 | 7.6 |
| Example 9 | | 1000 | $2.5 \times 10^{-11}$ | 86 | 87 | 10.3 |

It can be seen through comparison between Example 1 and Example 6 to Example 9 that the average particle size of the second active material nano graphite introduced affects the lithium ion diffusion coefficient at a high SOC and the fast charging capability of the lithium-ion battery. In Example 1 in which the average particle size of the second active material nano graphite is 100 nm, the largest lithium ion diffusion coefficient is obtained at a high SOC and the highest capacity in the stage CC during charging at a rate of 3C is also obtained, and therefore the lithium-ion battery has a more excellent fast charging capability.

Example 4 and Example 10 to Example 12 reflect the influences of the distribution manner of the second active material in the composite particle on the performance of the lithium-ion battery. The second active material is nano lithium titanate with an average particle size of 100 nm, and detailed data are shown in Table 3.

**Table 3**

| Example | Second active material | Distribution of second active material | Impedance Rct (mQ) | Lithium ion diffusion coefficient at 90% SOC ($cm^2 \cdot s^{-1}$) |
|---|---|---|---|---|
| Example 4 | Nano lithium titanate | Disordered distribution | 15 | $9.4 \times 10^{-10}$ |
| Example 10 | | Single-layer distribution | 15 | $9.7 \times 10^{-9}$ |
| Example 11 | | Double-layer distribution | 15 | $1.1 \times 10^{-9}$ |
| Example 12 | | Particle adsorption | 75 | $1.5 \times 10^{-11}$ |

It can be seen through comparison between Example 4 and Example 10 to Example 12 that the second active material being in disordered distribution or layered distribution inside the composite particle can effectively increase the lithium ion diffusion coefficient at a high SOC, thereby further improving the fast charging performance, rate performance, and cycling performance of the secondary battery.

Although some exemplary embodiments of this application have been illustrated and described, this application is not limited to the disclosed embodiments. On the contrary, persons of ordinary skill in the art will recognize that some modifications and changes can be made to the described embodiments without departing from the spirit and scope of this application described in the appended claims.

**Claims**

1. A negative active material, comprising composite particles; wherein each composite particle comprises a first region and a second region, the first region comprises a disordered carbon structure, the second region comprises an ordered carbon structure and/or a metal oxide structure, and a surface of the each composite particle comprises the first region.

2. The negative active material according to claim 1, wherein the first region comprises a first active material, the first active material comprises hard carbon; and/or
the second region comprises a second active material, the second active material comprises at least one of graphite, graphene, carbon nanotubes, lithium oxide, or a transition metal oxide.

3. The negative active material according to claim 1 or 2, wherein the second active material satisfies at least one of the following conditions:

    (1) an average particle size of the graphite is 10 nm to 1000 nm;
    (2) an average flake size of the graphene is 10 nm to 2000 nm;
    (3) an average diameter of the carbon nanotubes is 10 nm to 2000 nm;
    (4) an average particle size of the lithium oxide is 10 nm to 1000 nm; or
    (5) an average particle size of the transition metal oxide is 10 nm to 1000 nm.

4. The negative active material according to any one of claims 1 to 3, wherein the second active material satisfies at least one of the following conditions:

    (6) an average particle size of the graphite is 20 nm to 300 nm;
    (7) an average flake size of the graphene is 20 nm to 500 nm;
    (8) an average diameter of the carbon nanotubes is 20 nm to 500 nm;
    (9) an average particle size of the lithium oxide is 20 nm to 300 nm; or
    (10) an average particle size of the transition metal oxide is 20 nm to 300 nm.

5. The negative active material according to any one of claims 1 to 4, wherein the second region is in disordered distribution or layered distribution inside the composite particle.

6. The negative active material according to any one of claims 1 to 5, wherein the each composite particle is a primary particle, with a particle size of the primary particle satisfies 3 $\mu$m<$D_v$50≤12 $\mu$m.

7. The negative active material according to any one of claims 1 to 6, wherein the negative active material satisfies at least one of the following conditions (a) to (c):

(a) an X-ray photoelectron spectroscopy pattern of the negative active material shows a characteristic peak within a range of 283 eV to 288 eV;
(b) the negative active material has an ID/IG of 0.6 to 1.3, wherein ID represents a peak intensity within a wavenumber of 1300 cm$^{-1}$ to 1400 cm$^{-1}$ during a Raman spectrum test, and IG represents a peak intensity within a wavenumber of 1550 cm$^{-1}$ to 1650 cm$^{-1}$ during a Raman spectrum test; or
(c) a specific surface area of the negative active material is 1 m$^2$/g to 50 m$^2$/g.

8. The negative active material according to any one of claims 1 to 7, wherein the negative active material satisfies at least one of the following conditions (d) to (g):

(d) an X-ray diffraction pattern of the negative active material shows a characteristic peak within a range of 18° to 30°, wherein a half width of the characteristic peak is 4° to 12°;
(e) an X-ray diffraction pattern of the negative active material shows a characteristic peak within a range of 26° to 27°;
(f) an X-ray diffraction pattern of the negative active material shows a characteristic peak within at least one of the following ranges: 18° to 19°, 35° to 36°, or 43° to 44°; or
(g) an X-ray diffraction pattern of the negative active material shows a characteristic peak within at least one of the following ranges: 30° to 31°, 35° to 36°, 42.5° to 43.5°, 56.5° to 57.5°, or 62° to 63°.

9. A secondary battery, comprising a negative electrode, the negative electrode comprising a negative active material layer and a current collector, wherein the negative active material layer comprises the negative active material according to any one of claims 1 to 8.

10. An electronic apparatus, comprising the secondary battery according to claim 9.

FIG. 1

FIG. 2

FIG. 3

FIG. 4

FIG. 5

Disordered distribution    Layered distribution    Double-layer distribution

FIG. 6

Europäisches
Patentamt

European
Patent Office

Office européen
des brevets

# EUROPEAN SEARCH REPORT

Application Number

EP 23 18 0548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 006 554 B (INST OF NEW ENERGY SHENZHEN) 28 November 2017 (2017-11-28)<br>* Summary of the invention *<br>* Detailed ways *<br>* figure 2 *<br>----- | 1-10 | INV.<br>H01M4/131<br>H01M4/133<br>H01M4/1391<br>H01M4/1393<br>H01M4/36 |
| X | CN 108 232 175 B (ANHUI KEDA BORUI ENERGY TECH CO LTD ET AL.)<br>22 September 2020 (2020-09-22)<br>* examples 1-6 *<br>* Summary of the invention *<br>----- | 1-5,7-10 | H01M4/485<br>H01M4/583<br>H01M10/0525<br>H01M4/02 |
| X | EP 3 690 996 A1 (BTR NEW MAT GROUP CO LTD [CN]) 5 August 2020 (2020-08-05)<br>* paragraphs [0009], [0024] *<br>* example 2 *<br>----- | 1,2,5-10 | |
| A | CN 103 346 324 A (NINGBO INST MATERIALS TECHNOLOGY & ENG CAS)<br>9 October 2013 (2013-10-09)<br>* claims 1,5,7,8 *<br>----- | 1-10 | |

TECHNICAL FIELDS
SEARCHED (IPC)

H01M

The present search report has been drawn up for all claims

| Place of search | Date of completion of the search | Examiner |
|---|---|---|
| Munich | 19 October 2023 | Galbiati, Ivano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 18 0548

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2023

| Patent document cited in search report | | Publication date | Patent family member(s) | | Publication date |
|---|---|---|---|---|---|
| CN 105006554 | B | 28-11-2017 | NONE | | |
| CN 108232175 | B | 22-09-2020 | NONE | | |
| EP 3690996 | A1 | 05-08-2020 | CN | 107768626 A | 06-03-2018 |
| | | | EP | 3690996 A1 | 05-08-2020 |
| | | | JP | 6963734 B2 | 10-11-2021 |
| | | | JP | 2020510962 A | 09-04-2020 |
| | | | KR | 20200039715 A | 16-04-2020 |
| | | | US | 2020243846 A1 | 30-07-2020 |
| | | | WO | 2019063006 A1 | 04-04-2019 |
| CN 103346324 | A | 09-10-2013 | NONE | | |

EPO FORM P0459

For more details about this annex : see Official Journal of the European Patent Office, No. 12/82